## Europäisches Patentamt
## European Patent Office
## Office européen des brevets

(19)

(11) Numéro de publication: **0 015 216**
**B1**

(12)

# FASCICULE DE BREVET EUROPEEN

(45) Date de publication du fascicule du brevet:
**08.12.82**

(51) Int. Cl.³: **F 02 K 9/82**

(21) Numéro de dépôt: **80400263.2**

(22) Date de dépôt: **26.02.80**

(54) Agencement de pilotage d'un propulseur d'engin à propergol solide.

(30) Priorité: **27.02.79 FR 7904987**

(43) Date de publication de la demande:
**03.09.80 Bulletin 80/18**

(45) Mention de la délivrance du brevet:
**08.12.82 Bulletin 82/49**

(84) Etats contractants désignés:
**DE GB IT**

(56) Documents cités:
**FR-A-1 488 319**
**FR-A-1 522 555**
**FR-A-2 038 073**
**FR-A-2 408 037**
**GB-A-1 434 195**
**US-A-3 091 924**
**US-A-3 147 590**
**US-A-3 195 303**
**US-A-3 296 799**
**US-A-3 370 794**
**US-A-3 759 039**

(73) Titulaire: **Société Nationale Industrielle Aerospatiale Société anonyme dite:, 37 Bld de Montmorency, F-75016 Paris (FR)**

(72) Inventeur: **Calabro, Max Jean-Pierre, 19 rue F. Clavel, F-92150 Suresne (FR)**

(74) Mandataire: **Barnay, André François et al, Cabinet Barnay 80 rue Saint-Lazare, F-75009 Paris (FR)**

Agencement de pilotage d'un propulseur d'engin à propergol solide

L'invention se rapporte au pilotage de proluseurs d'engins à propergol solide.

Parmi les différents systèmes utilisés pour piloter un propulseur d'engin balistique, on peut citer en premier lieu le système de pilotage par tuyères orientables. Dans ce système, la déviation du jet du moteur à réaction ou du propulseur de l'engin peut être obtenue et contrôlée par l'intermédiaire de tuyères mobiles par rapport à l'axe du propulseur. La réalisation d'un tel système est lourde et compliquée.

Un autre système de pilotage consiste à placer dans le jet de la tuyère d'éjection des gouvernes aérodynamiques afin de créer sur le propulseur des efforts latéraux très importants. En général, ce type de pilotage provoque des traînées de gouverne non négligeables, susceptibles de limiter les performances du propulseur.

Dans un autre système de pilotage connu, on équipe les flancs d'un propulseur principal d'un ensemble de petits propulseurs auxiliaires totalement indépendants du propulseur principal. Ces propulseurs auxiliaires doivent bénéficier d'une réalisation très soignée, car ils interviennent de façon non négligeable dans la sûreté de fonctionnement de l'ensemble propulsif; de plus, ils augmentent considérablement la masse du véhicule.

Enfin, un des derniers procédés connus de pilotage d'engins consiste à effectuer l'injection dans la tuyère, en des points judicieusement choisis, de gaz chauds en provenance du propulseur. Ainsi, suivant le FR-A-1 488 319, des gaz sont prélevés dans la chambre du propulseur pour être réinjectés dans le divergent de la tuyère. Un tel procédé et différents moyens de mise en oeuvre sont également décrits dans la demande de brevet français n° 69/09 027 jubliée sous le n° 2 038 073 et les US-A-3 147 590 et US-A-3 759 039. Mais, conformément à l'enseignement de ces documents antérieurs, les gaz prélevés circulent dans un conduit ou dans un récipient situé à l'extérieur du propulseur. Ils sortent donc du propulseur avant d'être réinjectés dans le divergent par l'intermédiaire d'une vanne située elle aussi à l'extérieur du propulseur. Dans la plupart des solutions adoptées ici, il est nécessaire de percer la structure du réservoir pour y faire passer les conduits de gaz chauds. Ceci entraîne une réalisation complexe et délicate, donc peu fiable, et nécessite en outre un renforcement de la structure, ce qui, avec la présence des conduits, pénalise l'ensemble en ce qui concerne le poids.

Le FR-A-1 522 555 (SNECMA) décrit dans un agencement de pilotage d'un propulseur d'engin, l'utilisation d'un bloc auxiliaire de poudre émettant des gaz beaucoup moins chauds que les gaz de combustion du propulseur.

On connaît encore, par le US-A-3 370 794, et par l'article »Secondary Injection Thrust Vecto Control Using Fluidic Vortex Valves de J. G. Rivard, publié dans »Wescon Technical Papers, n° 11, 22 août 1967 — Western Periodicals — North Hollywood (US) un agencement de pilotage fonctionnant par injection dans la tuyère de gaz chauds issus du propulseur, dans lequel la partie antérieure de la tuyère, intégrée à l'intérieur du corps du propulseur, comporte, percés dans sa paroi, des orifices d'injection directe desdits gaz chauds issus du propulseur, chaque orifice pouvant être obturé à volonté au moyen d'une vanne à opercule. Un tel agencement de pilotage est toutefois soumis à une action thermique et érosive intense de la part des gaz chauds issus du propulseur, et aucune précaution n'est prise pour pallier ce grave inconvénient. C'est pourquoi selon l'invention, lesdits orifices et les opercules desdites vannes, situés à l'intérieur du corps du propulseur, sont protégés de l'action thermique et éroxive des gaz issus du propulseur par la disposition d'un bloc auxiliaire de poudre choisie pour émettre des gaz beaucoup moins chauds et érosifs que les gaz de combustion du propulseur, ledit bloc auxiliaire de poudre étant placé à proximité desdits orifices et desdits opercules et étant moulé en forme d'anneau autour de la partie de la tuyère intégrée dans le corps du propulseur, avec interposition d'un manchon isolant et d'une couche d'inhibiteur d'infammation pour protéger le bloc auxiliaire de poudre vis-à-vis de l'action thermique de la tuyère portée à haute température. De préférence, la poudre constituant le bloc auxiliaire est du type à faible taux d'aluminium fournissant des gaz réducteurs.

Avantageusement, l'opercule d'obturation de chacune desdites vannes est en carbone-carbone, déplaçable en translation et solidarisé à la tige d'un vérin de commande respectif avec interposition d'un isolant. La liaison entre opercule et tige de vérin est de préférence réalisée soublement par collage et emboîtement à queue d'aronde maintenu par chevillage.

Il convient selon l'invention de réaliser la tige actionnant l'opercule d'obturation en métal tel que par exemple un alliage réfractaire, un acier inoxydable ou autre, et d'effectuer son refroidissement par un fluide. Dans une forme d'exécution avantageuse, le refroidissement de ladite tige s'effectue par le fluide d'activation du vérin contenu dans les chambres de ce dernier et/ou dans une chambre auxiliaire située en amont desdites chambres et entourant ladite tige. On peut alors prévoir que le refroidissement de ladite tige s'effectue par circulation forcée de fluide dans la chambre auxiliaire, alimentée en fluide indépendamment des chambres du vérin.

Les rebords des orifices d'injection constituant le siège des organes d'obturation peuvent avantageusement être recouverts d'un matériau carbone-carbone. Ce dernier peut être différent du matériau carbone-carbone de la tuyère; dans ce cas, le siège est constitué par une pièce insérée dans la veine monobloc.

La description qui va suivre, en regaed des dessins annexés à titre d'exemple non limitatif, permettra de bien comprendre comment la présente invention peut être mise en pratique.

La figure 1 représente schématiquement, en coupe axiale, une tuyère dotée d'un agencement de pilotage selon l'invention, seule une moitié de la tuyère étant montrée.

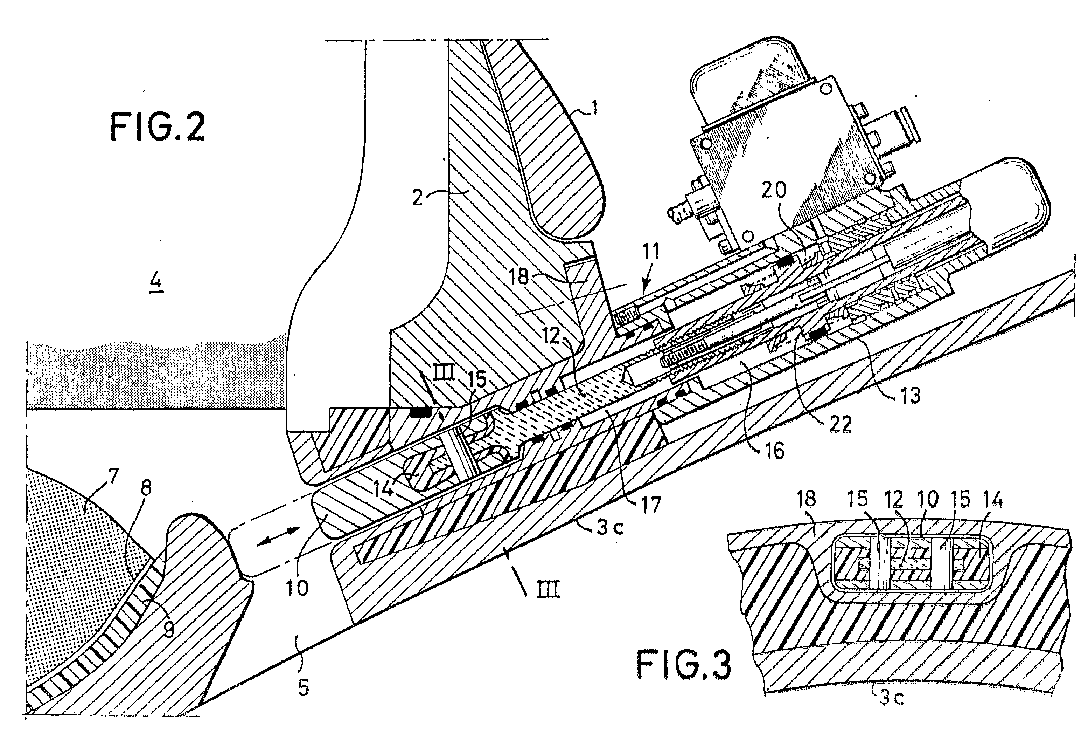

La figure 2 représente à plus grande échelle la partie centrale de la figure 1.

La figure 3 représente une coupe suivant la ligne III-III de la figure 2.

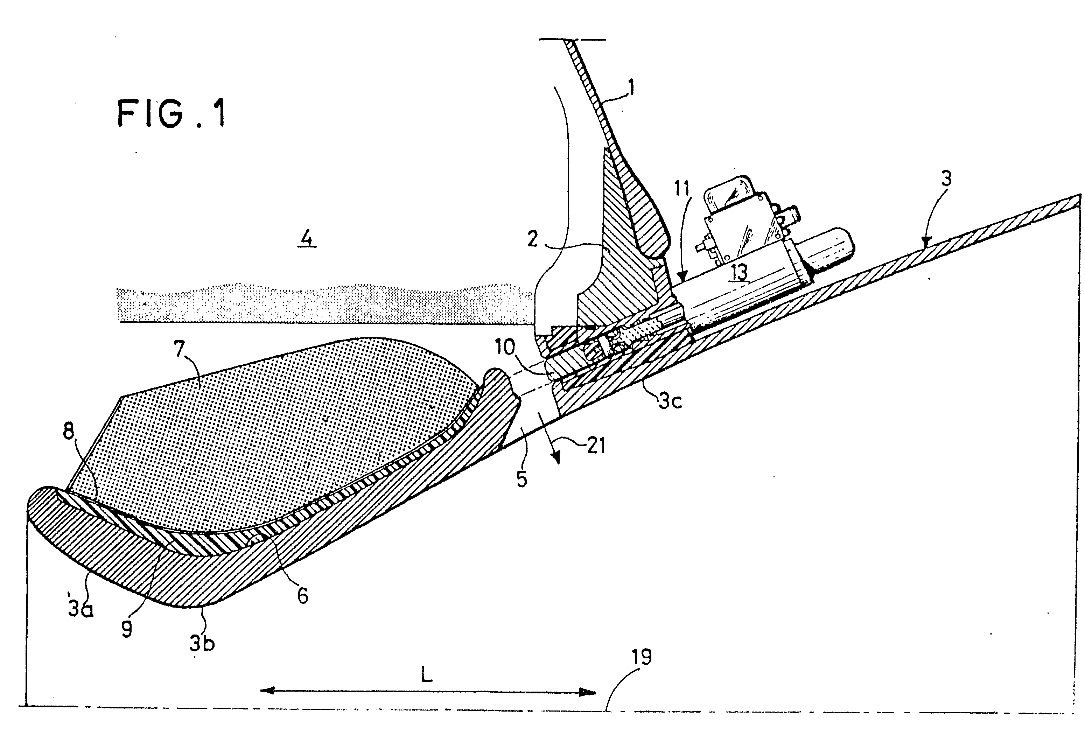

On voit sur la figure 1 la partie arrière d'un corps de propulseur d'engin balistique. Sur le fond de l'enveloppe du corps de propulseur 1 est rapportée une embase métallique 2 annulaire dans laquelle est montée, par l'intermédiaire d'un cadre annulaire 18, une tuyère 3 fixe. Celle-ci, du type décrit dans la demande de brevet français n° 77/33 442 jublie sous le n° 2 408 037, est constituée par une unique pièce monobloc en carbone dont la forme fait apparaître les différentes parties de la tuyère, à savoir le convergent 3a, le col 3b et le divergent 3c. Une partie importante de la tuyère 3, comprenant le convergent, le col et une longueur L du divergent est engagée à l'intérieur du corps du propulseur 1, lequel comporte, de manière classique, un chargement constitué par un bloc de poudre 4 dont la combustion donne des gaz très chauds et généralement très érosifs.

Sensiblement en amont de la région de pénétration de la tuyère 3 dans le corps du propulseur 1, donc à l'intérieur dudit corps, le divergent 3c est percé d'au moins trois orifices tels que 5 situés dans un même plan sensiblement perpendiculaire à l'axe 19 du propulseur, orifices pouvant être constitués par des trous ou des fentes d'injection dont la forme et le nombre sont les mieux adaptés en vue de la tenue mécanique de la tuyère et d'un pilotage efficace.

En amont des orifices 5, sur la paroi externe 6 de la partie de la tuyère intégrée dans le corps du propulseur 1 est disposé un bloc auxiliaire de poudre 7 de forme annulaire. Ce bloc de poudre auxiliaire, à faible taux d'aluminium, se consume à température nettement plus basse que le chargement 4 du propulseur et donne des gaz réducteurs. Dans l'exemple présenté, ce bloc auxiliaire de poudre 7 de forme annulaire est moulé en forme directement sur la tuyère. Il est isolé de la veine monobloc par un anneau inhibiteur 8 et un manchon 9 réalisé en un matériau isolant tel que par exemple un ciment réfractaire ou un composite fibre/résine (graphite ou carbone phénolique), pour éviter une combustion trop rapide du bloc auxiliaire de poudre 7 par inflammation de la face interne de celui-ci par le matériau de veine. En effet, ce dernier, lors du fonctionnement de l'ensemble propulsif, est à une température largement supérieure à la température d'auto-inflammation de la poudre du bloc auxiliaire de poudre 7.

Chaque orifice 5 permet l'injection dans le divergent 3c de tuyère des gaz chauds issus directement du propulseur (suivant la flèche 21); en fonctionnement courant de la tuyère, il est obturé par un opercule 10 d'une vanne d'injection 11. L'opercule 10 a la forme d'une palette, réalisée en un matériau carbone-carbone et rendue solidaire d'un tige 12 d'un vérin hydraulique 13 de commande de la vanne d'injection. Ce vérin est situé à l'extérieur du propulseur 1 et est monté sur la cadre 18 de la tuyère par l'intermédiaire d'une bride vissée, non représentée.

La tige de commande 12, réalisée en un alliage réfractaire, est solidarisée par collage avec la palette 10, avec interposition d'un isolant 14 en carbone phénolique, par exemple. Cette liaison palette-isolant, c'est-à-dire carbone-carbone/carbone phénolique, se fait de plus au moyen d'un emboîtement en queue d'aronde, car, à chaud, le collage des deux pièces 10 et 14 est détruit. La liaison tige de commande 12/isolant 14, donc alliage réfractaire/carbone phénolique, se fait également par collage. De plus, les trois pièces en cause (palette 10, isolant 14 et tige 12) sont liées par deux chevilles 15 en carbone-carbone, par mesure de sécurité et pour éviter tout risque de déplacement latéral d'une pièce par rapport à une autre.

La tige de commande 12 de la palette 10 d'obturation d'un orifice d'injection 5 est refroidie par le liquide hydraulique d'activation du vérin 13, présent dans les chambres 16, 20 dudit vérin encadrant son piston 22 et dans une chambre auxiliaire 17 située en amont de la chambre antérieure 16. Le refroidissement de la tige 12 peut s'effectuer si nécessaire par une circulation forcée de fluide dans la chambre auxiliaire 17. Dans ce cas, celle-ci est munie d'une alimentation en fluide hydraulique indépendante de celle du vérin 13.

Ce système de refroidissement et le montage du vérin directement sur le cadre 18 de la tuyère procure un effet d'étanchéité au niveau de la palette 10 et de sa tige de commande 12, grâce à la surpression externe due au liquide hydraulique par rapport au propulseur, ce qui permet d'éviter une fuite de gaz de combustion ou un grippage de la tige de commande par suite de dilatations successives. De plus, l'étanchéité au niveau de la tige de commande est réalisée de manière classique par deux joints toriques avec drain intermédiaire.

Pour obtenir un pilotage efficace d'un propulseur d'engin balistique, l'agencement de pilotage objet de la présente invention comprend au moins trois orifices d'injection 5, disposés dans un même plan et régulièrement répartis à 120° autour de la tuyère et, par conséquent, trois ensembles d'obturation. La tuyère pourrait comporter également quatre orifices et ensembles espacés de 90°.

En fonctionnement courant, chaque palette 10 obture l'orifice d'injection 5 correspondant. L'ambiance thermique au voisinage des orifices d'injection est rendue plus favorable par la présence des gaz réducteurs issus du bloc auxiliaire de poudre 7 à faible température de combustion, donc moins érosifs que ceux issus de la combustion du bloc 4 du propulseur.

Dans cette ambiance moins agressive, les palettes 10 sont protégées de l'érosion à la fois par la combustion de ce bloc auxiliaire de poudre 7 »froide« et du fait de leur réalisation en matériau carbone-carbone. Par ailleurs, les gaz issus du bloc auxiliaire de poudre 7 protègent également la tuyère de l'ambiance agressive des gaz du bloc principal 4. Cependant l'emploi d'un tel bloc auxiliaire n'est justifié que si les gaz issus du bloc principal sont susceptibles de créer une atmosphère trop agressive pour les matériaux constitutifs de la palette d'obturation et/ou de la tuyère.

Lorsqu'on veut piloter l'engin, l'activation des vérins 13 commande le ratrait d'une ou de plusieurs palettes 10 et des gaz très chauds issus de la combustion du bloc de poudre principal 4 passent dans les orifices 5 correspondants pour s'injecter directement dans le divergent de tuyère. Dans ce cas également, le débit du bloc auxiliaire contribue, en se mélangeant avec le débit du bloc principal, à atténuer l'agression thermochimique vis-à-vis des orifices, des palettes et de leurs sièges.

L'agencement des orifices d'injection, du bloc auxiliaire de poudre et des système d'obturation conduit au fait que la tuyère et le système de pilotage forment un tout compact, léger, fiable, intégrable et contrôlable séparément, indépendamment du corps du propulseur qui n'est pas affecté dans sa structure par la présence de l'agencement de pilotage selon l'invention.

## Revendications

1. Agencement de pilotage d'un propulseur d'engin à propergol solide par injection dans la tuyère (3) de gaz chauds issus du propulseur, la partie antérieure de la tuyère (3), intégrée à l'intérieur du corps (1) du propulseur, comportant, percés dans sa paroi, au moins trois orifices (5) d'injection directe desdits gaz chauds issus du propulseur, dont chacun peut être obturé à volonté au moyen d'une vanne (11) à opercule (10), caractérisé par le fait que lesdits orifices (5) et les opercules (10) desdites vannes (11), situés à l'intérieur du corps (1) du propulseur, sont protégés de l'action thermique et érosive des gaz issus du propulseur par la disposition d'un bloc auxiliaire de poudre (7) choisie pour émttre des gaz beaucoup moins chauds et érosifs que les gaz de combustion du propulseur, et que ledit bloc auxiliaire de poudre (7) est placé à proximité desdits orifices (5) et desdits opercules (10) et est moulé en forme d'anneau autour de la partie de la tuyère intégrée dans le corps (1) du propulseur, avec interposition d'un manchon isolant (9) et d'une couche (8) d'inhibiteur d'infammation.

2. Agencement selon la revendication 1, caractérisé par le fait que l'opercule (10) desdites vannes (11) est réalisé en carbone-carbone et est solidarisé, avec interposition d'un isolant, à la tige (12) d'un vérin (13) respectif de commande de déplacement en translation.

3. Agencement selon la revendication 2, caractérisé par le fait que la liaison entre opercule (10) et tige (12) de vérin (13) est réalisée soublement par collage et emboîtement à queue d'aronde maintenu par chevillage.

4. Agencement selon la revendication 2 ou 3, caractérisé par le fait que la tige (12) actionnant l'opercule (10) est réalisée en métal tel que par exemple un alliage réfractaire, un acier inoxydable ou autre, et est refroidie par un fluide.

5. Agencement selon la revendication 4, caractérisé par le fait que le refroidissement de ladite tige (12) s'effectue par le fluide d'activation du vérin (13) contenu dans les chambres (16, 20) de ce dernier et/ou dans une chambre auxiliaire (17) située en amont desdites chambres (16, 20) et entourant ladite tige (12).

6. Agencement selon la revendication 5, caractérisé par le fait que le refroidissement de ladite tige (12) s'effectue par circulation forcée de fluide dans la chambre auxiliaire (17), alors alimentée en fluide indépendamment des chambres (16, 20) du vérin (13).

7. Agencement selon l'une quelconque des revendications 1 à 6, caractérisé par le fait que les rebords des orifices (5) d'injection constituant le siège des opercules (10) sont recouverts d'un matériau carbone-carbone.

## Patentansprüche

1. Vorrichtung zur Steuerung eines Triebwerks einer Feststoffrakete durch Injektion heißer Triebwerksgase in die Düse (3), wobei der im Inneren des Triebwerkkörpers (1) fest eingebaute vordere Teil der Düse (3) mindestens drei seine Wand durchringende gerade Einlaßöffnungen (5) für die heißen Triebwerksgase aufweist, deren jede mittels eines Schiebers (10) einer Absperrvorrichtung (11) beliebig geschlossen werden kann, dadurch gekennzeichnet, daß die im Inneren des Triebwerkkörpers (1) angeordneten Öffnungen (5) und Schieber (10) der Absperrvorrichtung (11) gegen thermische und erodierende Einwirkung der Triebwerksgase durch eine von einem Hilfspulverblock (7) gebildete Anordnung geschützt ist, wobei dieser so gewählt ist, daß die von ihm abgegebenen Gase erheblich weniger heiß und erodierend als die Verbrennungsgase des Triebwerks sind, und daß der Hilfspulverblock (7) in der Nähe der Öffnungen (5) und der Schieber (10) angeordnet und als Ring um den im Triebwerkskörper (1) fest eingebauten Teil der Düse geformt ist, wobei zwischen beiden eine Isolierbüchse (9) und eine feuerhemmende Schutzschicht (8) vorgesehen ist.

2. Vorrichtung nach Anspruch 1, dadurch gekennzeichnet, daß der Schieber (10) der Absperrvorrichtung (11) aus karbonfaserverstärktem Kohlenstoff besteht und jeweils über einen Isolierkörper (14) mit der Stange (12) einer Antriebswinde (13) zur Verschiebung in Längsrichtung kraftschlüssig verbunden ist.

3. Vorrichtung nach Anspruch 2, dadurch gekennzeichnet, daß die Verbindung zwischen dem Schieber (10) und der Stange (12) der Winde (13) zweifach durch Verklebung und durch eine durch Verzapfung gehaltene Schwalbenschwanzeinpassung erfolgt.

4. Vorrichtung nach Anspruch 2 oder 3, dadurch gekennzeichnet, daß die den Schieber (10) betätigende Stange (12) aus Metall, beispielsweise aus einer hoch temperaturfesten Legierung, aus nicht rostendem Stahl oder dergleichen besteht und durch eine Flüssigkeit gekühlt ist.

5. Vorrichtung nach Anspruch 4, dadurch gekennzeichnet, daß die Kühlung der Stange (12) durch die Betätigungsflüssigkeit der Winde (13) erfolgt, die in den Kammern (16, 20) und/oder in einer Hilfskammer (17), die oberhalb der Kammern (16, 20) angeordnet ist und die Stange (12) umgibt, enthalten ist.

6. Vorrichtung nach Anspruch 5, dadurch gekennzeichnet, daß die Kühlung der Stange (12) durch eine erzwungene Zirkulation der Flüssigkeit in der Hilfskammer (10) erfolgt, wobei diese unabhängig von den Kammern (16, 20) der Winde (13) mit Flüssigkeit gespeist ist.

7. Vorrichtung nach einem der Ansprüche 1 bis 6, dadurch gekennzeichnet, daß die Ränder der Einlaßöffnungen (5), die den Sitz für die Schieber (10) bilden, mit karbonfaserverstärktem Kohlenstoff beschichtet sind.

## Claims

1. Arrangement for control of the propulsion unit of a solid propellant engine by injection into the nozzle (3) of hot gases form the propulsion unit, in which the front portion of the nozzle (3) connected with the interior of the body (1) of the propulsion unit has, in its wall, at least three orifices (5) for direct injection of such hot gases issuing from the propulsion unit, each of which can be closed as desired by means of a valve (11) having a slide plate (10), characterized in that the orifices (5) and the plates (10) of the valves (11), positioned inside the body (1) of the propulsion unit, are protected from the thermal and erosive action of the gases from the propulsion unit by the provision of an auxiliary block of powder (7) selected to emit gases which are substantially less hot and erosive than the combustion gases of the propulsion unit and in that the auxiliary block of powder (7) is located adjacent the orifices (5) and the plates (10) and is moulded in the form of a ring around the part of the nozzle connected with the body (1) of the propulsion unit, with an insulating sleeve (9) and a combustion inhibiting layer (8) being interposed.

2. Arrangement according to claim 1, characterized in that the plate (10) of each valve (11) is made of carbon-carbon and is secured, with the interposition of an insulator, to the stem (12) of a respective operating rod (13) for translational movement.

3. Arrangement according to claim 2, characterized in that the connection between the plate (10) and the stem (12) of the rod (13) is effected both by adhesion and by an interlocking dovetail joint secured by pegging.

4. Arrangement according to claim 2 or 3, characterized in that the stem (12) actuating the plate (10) is made from a metal such as a refractory alloy or a stainless or other steel and is cooled by a fluid.

5. Arrangement according to claim 4, characterized in that cooling of the stem (12) is effected by the actuating fluid of the rod (13) contained in chambers (16, 20) of the latter and/or in an auxiliary chamber (17) located upstream of the chambers (16, 20) and surrounding the stem (12).

6. Arrangement according to claim 5, characterized in that cooling of the stem (12) is effected by forced circulation of fluid in the auxiliary chamber (17), which is thus supplied with fluid independently of the chambers (16, 20) of the rod (13).

7. Arrangement according to any of claims 1 to 6, characterized in that the rims of the injection orifices (5) constituting seatings for the plates (10) are coveres in a carbon-carbon material.

**FIG. 1**

FIG.2

FIG.3